# EUROPEAN PATENT SPECIFICATION

(11) **EP 1 507 358 B1**
(45) Date of publication and mention of the grant of the patent: **15.10.2008**
(21) Application number: 04019415.1
(22) Date of filing: 16.08.2004
(51) Int. Cl.: H04L 12/18, H04Q 7/20

(54) **Method of using a service identifier for transmitting control information in a mobile communication system providing multimedia broadcast/multicast services**
Verfahren zur Benutzung eines Dienstbezeichners zur Übertragung von Steuerungsinformation in einem mobilen Kommunikationsnetz zur Unterstützung eines Multimedia Broadcast/multicast-Dienstes
Procédé d'utilisation d'une identification de service pour la transmission des informations de commande dans un système de communication mobile supportant des services multimédia de diffusion/multi-diffusion

(30) Priority: 14.08.2003 KR 2003056628
(43) Date of publication of application: 16.02.2005
(73) Proprietor: SAMSUNG ELECTRONICS CO., LTD., Suwon-si, Gyeonggi-do (KR)
(72) Inventor: Hwang, Sung-Oh, Yeongtong-gu Suwon-si Gyeonggi-do (KR); Kim, Soeng-Hun, Yeongtong-gu Suwon-si Gyeonggi-do (KR); Choi, Sung-Ho, Yeongtong-gu Suwon-si Gyeonggi-do (KR)
(74) Representative: Grünecker, Kinkeldey, Stockmair & Schwanhäusser Anwaltssozietät

(56) References cited:
- EP-A- 1 353 523
- EP-A- 1 363 467
- EP-A- 1 387 591
- 3RD GENERATION PARTNERSHIP PROJECT: "3GPP TR 23.846 v. 6.1.0: Multimedia Broadcast/Multicast Service (MBMS); Architecture and Functional Description (Release 6)" 3GPP TR 23.846 6.1.0, 1 December 2002 (2002-12-01), XP002313494

## Description

### BACKGROUND OF THE INVENTION

### 1. Field of the Invention

The present invention relates to a multimedia broadcast/multicast service ("MBMS") for a mobile communication system, and more particularly to a method for effectively using an identifier used for the MBMS.

### 2. Description of the Related Art

Recently, as communication technologies have developed, a CDMA (code division multiple access) mobile communication system provides not only a voice service, but also a packet service for transmitting mass storage data, such as packet data or circuit data. In addition, the CDMA mobile communication system has been developed into a multimedia broadcast/communication system capable of providing multimedia services. Thus, in order to support the multimedia broadcast/communication system, there has been suggested an MBMS that provides services from one or more multimedia data sources to user equipment ("UE").

The MBMS uses a multimedia transmission mode for transmitting data, such as real time images, voice data, still images, and characters. The MBMS can simultaneously transmit voice data and image data in the multimedia transmission mode and may require extensive transmission resources. Since a plurality of UEs may join in the same service, the MBMS is provided through a broadcasting channel.

The MBMS includes a point to point ("PtP") service for providing services required by each subscriber and a point to multi-point ("PtM") service for providing services required by a plurality of subscribers. According to the MBMS, the PtP service can be replaced with the PtM service, while the PtP service is being provided to each cell, based on the number of UEs requesting the MBMS and the transmission power of a network supporting the MBMS. Of course, the PtM service can be replaced with the PtP service while the PtM service is being provided to each cell.

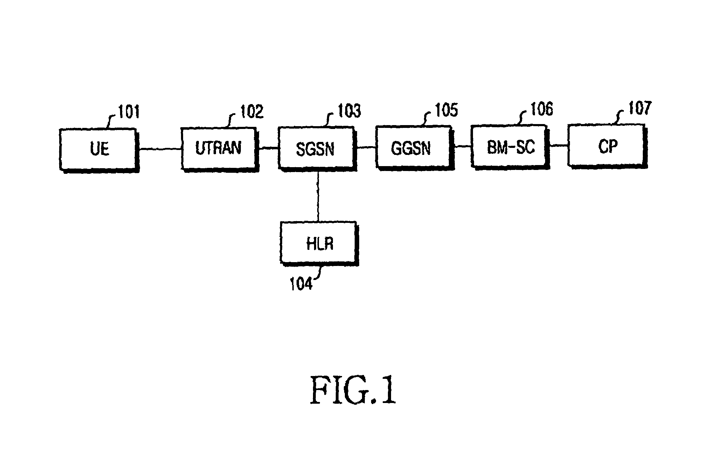

Hereinafter, a structure of an asynchronous mobile communication system for providing an MBMS will be described with reference to FIG. 1.

FIG. 1 is a block diagram illustrating a structure of a conventional asynchronous mobile communication system for providing the MBMS.

Referring to FIG 1, the conventional asynchronous mobile communication system includes a UE 101, a UMTS terrestrial radio access network ("UTRAN") 102, a serving general packet radio service support node ("SGSN") 103 included in a core network ("CN"), a home location register ("HLR") 104, a gateway general packet radio service support node ("GGSN") 105, a broadcast/multicast service center ("BM-SC") 106, and a contents provider ("CP") 107.

The functions of the above elements shown in FIG 1 are shown in Table 1. Although the functions of the above elements shown in FIG. 1 may vary slightly depending on the network administrators, the basic functions thereof will not be changed. In addition, although it is not illustrated in FIG 1, a cell broadcast center ("CBC") can be added to the above structure in order to provide information to the UE 101.

**Table 1**

| Elements | Functions |
|---|---|
| UE | Receives MBMS data so as to provide the MBMS data to users |
| UTRAN | Transfers MBMS data to the UE and transfers a MBMS request message from the UE to the CN |
| SGSN | -Receives data related to the UE requesting the MBMS from the HLR and authorizes the UE - Receives MBMS right requested by the UE from the HLR and authorizes the MBMS right - Sets an RAB for the MBMS requested by the UE - Supports the UE such that the UE can receive the MBMS when the UE moves from a corresponding cell - Makes connection with an MBMS provider through the GGSN - Collects charge information for the MBMS used by the UE |
| HLR | Manages authorization information for each UE and the sort of MBMS to be provided to the UE |
| GGSN | -Receives the MBMS data to be provided to the UE from the BM-SC and transmits the MBMS data to the SGSN - Collects charge information for the UE - Manages mobility of each UE, a movement state of each UE, and quality of the MBMS provided to each UE |
| BM-SC | - Manages authorization and charge information for the contents provider - Determines the quality of the MBMS - Corrects error for the MBMS data loss - Transfers the MBMS data provided from the contents provider to the GGSN - Notifies the UE of the available MBMS |
| CP | Provides the MBMS contents to the BM-SC |

The BM-SC 106 is a source for providing an MBMS data stream. The BM-SC 106 transfers the MBMS data stream to the GGSN 105 after scheduling the MBMS data stream. The GGSN 105 transfers the MBMS data stream to the SGSN 103. Herein, the SGSN 103 belongs to the CN and connects the CN to the UTRAN 102. For instance, if there are a plurality of UEs which are to receive the MBMS at a predetermined time, the SGSN 103 receiving the MBMS data stream from the GSN 105 may control the MBMS-related services for the users, that is. control the MBMS-related services for the UEs.

For example, the SGSN 103 manages the MBMS-related charge data for each subscriber and selectively transmits the MBMS data to a predetermined radio network controller ("RNC"), thereby controlling the MBMS. In addition, the SGSN 103 forms and manages a SGSN service context ("service context") with respect to a predetermined MBMS "X", and transfers the MBMS stream data to the RNC. A MBMS context is a set of control information required for providing the predetermined MBMS.

The RNC controls a plurality of nodes B and transmits the MBMS data to a node B having a UE that is requesting the MBMS from among the node Bs managed by the RNC. In addition, the RNC controls a radio channel providing the MBMS, forms an RNC service context with respect to the predetermined MBMS "X", and manages the RNC service context based on the MBMS stream data transmitted thereto from the SGSN 103. At this time, the HLR 104 connected to the SGSN 103 performs a subscriber authorization for the MBMS.

In addition, as mentioned above, the RNC and the SGSN manage information related to the MBMS based on the type of MBMS. The information stored in the MBMS context includes a list of UEs requesting the MBMS, that is, the identifiers of the UEs requesting the MBMS, the service areas in which the UEs are positioned, and the quality of service ("QoS") required for providing the MBMS.

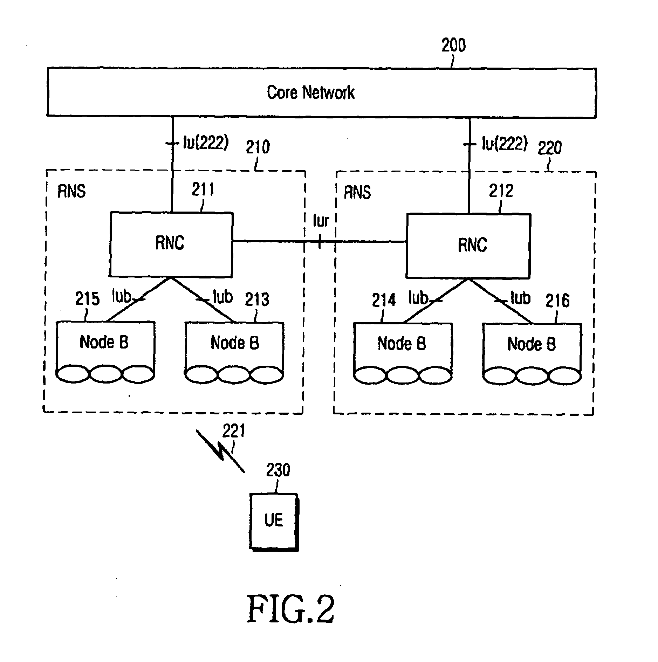

Hereinafter, the structure of the UTRAN shown in FIG. 1 will be described in detail with reference to FIG 2.

FIG. 2 is a diagram illustrating the structure of the UTRAN in a mobile communication system providing the MBMS.

Referring to FIG 2, a UE 230 is a user equipment for receiving the MBMS and has hardware or software for supporting the MBMS. The UTRAN is a radio communication network for connecting the UE 230 to a CN 200. The UTRAN includes a plurality of radio network systems ("RNS") 210 and 220, and the RNS includes a plurality of radio network controllers ("RNC") 211 and 212, base station apparatuses ("Node Bs") controlled by the RNCs 211 and 212, and a plurality of cells included in the Node Bs 115, 113, 114, and 116.

The RNS 210 includes Node Bs 215 and 213 controlled by the RNC 211, a plurality of cells controlled by the Node B 215, and a plurality of cells controlled by the Node B 213. In addition, the RNS 220 includes Node Bs 214 and 216 controlled by the RNC 212, a plurality of cells controlled by the Node B 214, and a plurality of cells controlled by the Node B 216. The total number of Node Bs controlled by the RNCs 211 and 212, and the total number of cells included in each Node B are determined according to a service provider and the performance of the RNCs 211 and 212 and Node Bs.

The UE 230 is connected to the RNSs 210 and 220 through a Uu interface 221. Each of RNSs 210 and 220 is connected to the CN 200 through an Iu interface 222. Table 2 shows interfaces for connecting nodes to each other.

**Table 2**

| Interface Name | Function |
|---|---|
| Uu | Interface between UE and UTRAN |
| Iu | Interface between UTRAN and CN |
| Gr | Interface between SGSN and HLR |
| Gn/Gp | Interface between SGSN and GGSN |
| Gi | Interface between GGSN and BM-SC |
| Gn/Gp | Interface between BM-SC and CP |

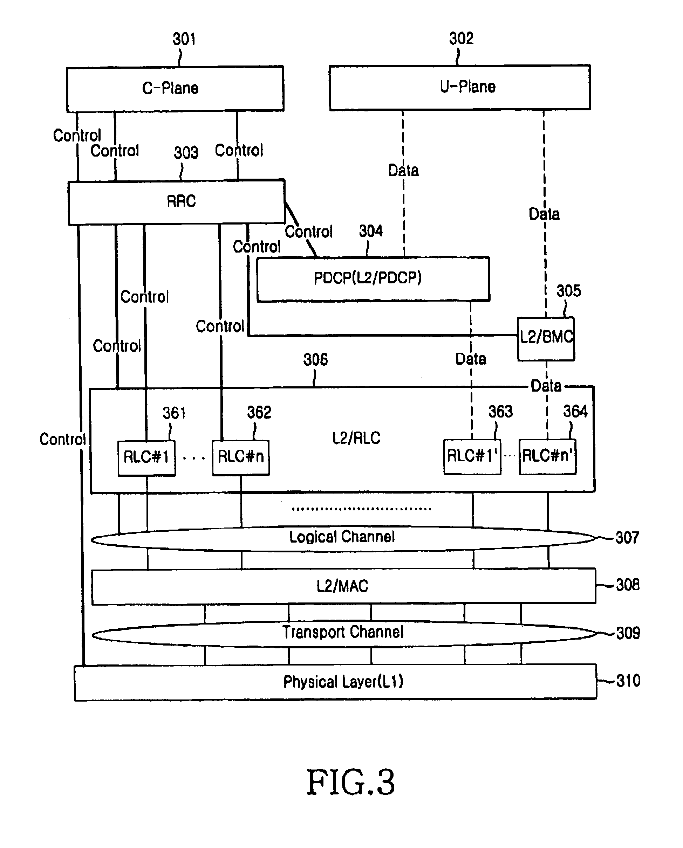

The interface name shown in Table 2 is defined in the 3GPP (3^{rd} Generation Partnership Project) standards, and it is possible to change the interface name. A structure of an upper layer of the UTRAN defined in the 3GPP and the channels between the layers will be described with reference to FIG. 3.

FIG 3 is a diagram illustrating a structure of a UTRAN protocol.

Referring to FIG 3, the messages of the upper layer processed in the UTRAN are divided into a control signaling group and a user data group.

In FIG. 3, the messages of the upper layer of the UTRAN are represented as a control plane ("C-Plane") signaling 301 and user plane ("U-Plane") data 302. The C-plane signaling 301 and the U-plane data 302 are messages of a non access stratum ("NAS"). The NAS messages are messages which are not used for a radio connection between the UE and the UTRAN, and it is not necessary for the UTRAN to know the contents of the NAS messages. Differently from the NAS messages, the messages used for the radio connection between the UE and the UTRAN are called "access stratum ("AS") messages", which are data or control signals used at an area below a radio resource control ("RRC") 303 shown in FIG. 3.

The RRC 303 controls a physical layer ("L1") relating to a connection between the UE and the UTRAN, a medium access control of L2 ("L2/MAC"), a radio link control of L2 ("L2/RLC"), a packet data convergency protocol of L2 ("L2/PDCP"), and a broadcast/multicast control of L2 ("L2/BMC"). In addition, the RRC 303 controls the connection between the UE and the UTRAN, such as a physical call setting, a logical call setting, the control information reception/transmission, and the data reception/transmission between the UE and the UTRAN.

The L2/PDCP 304 receives the data to be transmitted from an NAS layer and transmits the data to the L2/RLC 306 by using a predetermined protocol. The L2/BMC 305 receives the data required for the broadcast and multi-broadcast from the NAS layer and transmits the data to the L2/RLC 306 by using a predetermined protocol.

The L2/RLC 306 receives a control message, which is transmitted to the UE from the RRC 303, processes the control message in an RLC #1 361 and an RLC #n 362 by considering the characteristics of the control message, and transmits the processed control message to the LC/MAC 308 through a logical channel 307. In addition, the L2/RLC 306 receives DATA from the L2/PDCP 304 and the L2/BMC 305, processes the data in an RLC #1' 363 and an RLC #n' 364 and transmits the processed data to the LC/MAC 308 through the logical channel 307. The number of RLCs formed in the L2/RLC 306 may depend on the number of radio links between the UE and the UTRAN.

The logical channel 307 is divided into a dedicated type logical channel for a predetermined UE and a common type logical channel for a plurality of UEs. In addition, the logical channel 307 can be divided into a control type logical channel used for transmitting messages including data related to the control information and a traffic type logical channel used for transmitting messages including data related to the traffic information.

The types and functions of the logical channels 307 used in the 3GPP are shown in Table 3.

**Table 3**

| Channel Name | Function |
|---|---|
| BCCH (broadcast control channel) | Used for the downlink transmission from the UTRAN to the UE and for transmitting control information of a UTRAN system |
| PCCH (paging control channel) | Used for the downlink transmission from the UTRAN to the UE and for transmitting control information to the UE when a position of a cell including the UE is not known |
| CCCH (common control channel) | Used for the PtM control information transmission between the UE and a network and used when the UE has no connection channel for the RRC |
| DCCH (dedicated control channel) | Used for the PtP control information transmission between the UE and a network and used when the UE has a connection channel for the RRC |
| CTCH (common transport channel) | Used for the PtM control information transmission between a plurality of the UEs and a network |
| DTCH (dedicated transport channel) | Used for the PtP control information transmission between the UE and a network |

The L2/MAC 308 manages radio resources and a connection between the UE and the UTRAN under the control of the RRC 303. Thus, the L2/MAC 308 receives corresponding logical channels as shown in Table 3 from the L2/RLC 306 and transmits the corresponding logical channels to the L1 310 by mapping the corresponding logical channels with transport channels 309 represented in Table 4.

**Table 4**

| Channel name | Function |
|---|---|
| BCH (broadcast channel) | Mapped with the BCCH to transmit the data of the BCCH |
| PCH (paging channel) | Mapped with the PCCH to transmit the data of the PCCH |
| RACH (random access channel) | - Used for the network access and for transmitting the control messages and the short data from the UE to a network - Mapped with the DCCH, the CCCH, or the DTCH |
| FACH (forward access channel) | - Used for transmitting the control information messages or the data from a network to the UE or predetermined the UEs - Mapped with the BCCH, the CTCH, the CCCH, the DCTH, or the DTCH |
| DCH (dedicated channel) | - Used for transmitting the data and the control information messages between a network and the UE - Mapped with the BCCH or the DCTH |
| DSCH (down-link shared channel) | - Downlink channel used for transmitting the mass storage data from a network to the UE - Mapped with the DCTH or the DCCH |
| HS-DSCH (high speed DSCH) | - Downlink channel from a network to the UE and having improved transmission efficiency as compared with the DSCH - Mapped with the DCTH or the DCCH |

Although it is not illustrated in Table 4, other transport channels, such as an up-link shared channel and a common packet channel, can be used.

The transport channels 309 transmitted to the L1 310 shown in FIG. 3 are processed through a procedure corresponding to real physical channels and transmitted to the UE or the UTRAN. The physical channels include a primary common control physical channel ("P-CCPCH") for transmitting the BCH, a secondary common control synchronization channel for transmitting the PCH and FACH, a paging indicator channel ("PICH"), an acquisition indicator channel, and a physical common packet channel.

An example of the MBMS in the 3GPP mobile communication system has been described with reference to FIG 1, and the structure of the UTRAN and structures of L1, L2 and L3 of the UTRAN shown in FIG. 1 have been described with reference to FIGS. 2 and 3. Hereinafter, a procedure of providing the MBMS will be described with reference to FIGS. 1 to 3.

The CN 200 transmits the basic information and the service guide information of the MBMS to a plurality of UEs including the UE 230 through the UTRAN 210 in order to provide a predetermined MBMS. If the UE 230 receiving the basic information and the service guide information of the MBMS is to receive MBMS, the UE 230 is joined in the CN 200, which is called "joining". A list of the UEs including the UE 230 requesting the MBMS is transferred to the BM-SC 106, the SGSN 103 and the UTRAN 210 shown in FIG. 1.

At this time, when the MBMS starts, the CN 200 receiving the list of the UEs requesting the predetermined MBMS and the UTRANs 210 and 220 connected to the CN 200 transmit a paging message to the UEs including the UE 230. After that, a radio bearer ("RB") is set in order to provide the MBMS to the corresponding UEs. When the MBMS ends, it must be transferred to the all UEs that the MBMS ends. Thus, the CN 200 and the UTRAN 220 release the radio resources assigned to the UEs for the MBMS, so that the predetermined MBMS ends.

When providing the MBMS, the CN and the UTRAN may provide the corresponding MBMS to the UEs requesting the MBMS through a plurality of identifiers. In addition, the UEs may use a plurality of identifiers in such a manner that the MBMS data and the control information requested by the UEs can be distinguished from the MBMS data and the control information of other MBMSs.

Table 5 shows the identifiers used for the MBMS. The MBMS identifiers shown in Table 5 are distinguished from each other based on assigned areas thereof and effective ranges.

**Table 5**

| Type of identifiers | Function |
|---|---|
| MBMS service identifier | - Used for identifying a predetermined MBMS from the other MBMSs - Including IP address |
| MBMS CN identifier | - Used for identifying a predetermined MBMS from the other MBMSs in the CN - Effective range of an MBMS identifier is defined according to a master assigning the MBMS CN identifier |
| MBMS UTRAN identifier | Used for identifying a predetermined MBMS from the other MBMSs in the UTRAN |

As shown in Table 5, the identifiers used for providing the MBMS may include the MBMS service identifier ("MBMS service ID") for identifying the predetermined MBMS from the other MBMSs, the MBMS CN identifier for identifying the predetermined MBMS from other MBMSs in the CN, and the MBMS UTRAN identifier for identifying the predetermined MBMS from other MBMSs in the UTRAN. Herein, the MBMS service ID is used for identifying the predetermined MBMS in the upper layer of the CN. In addition, in the CN and the UTRAN, a temporary MBMS group indicator (TMGI) is set in relation to the MBMS service ID so as to identify the predetermined MBMS. As mentioned above, the applications of the identifiers can be defined in the corresponding nodes forming the MBMS. That is, if the BM-SC sets an identifier with respect to the predetermined MBMS, the identifier is effective in the BM-SC. In addition, if the SGSN sets an identifier according to the MBMS, the identifier is effective in the SGSN.

In other words, as shown in Table 5, an effective range for supporting the MBMS is determined in the corresponding node and a length of the corresponding identifier is determined according to the effective range. That is, the identifiers have lengths different from each other according to the effective ranges thereof. For instance, the MBMS CN identifier has a length of about 128 bits. In contrast, the TMGI has a length of about 4-5 bytes.

The MBMS identifiers are used for identifying the MBMS from the other MBMS in the 3GPP mobile communication network and for transferring the data and the control information in order to provide the MBMS. At this time, the data and control information pertaining to the MBMS are transmitted by using the MBMS identifier in relation to the predetermined MBMS requested by the corresponding UE.

In addition, the MBMS control information pertaining to the corresponding MBMS must be transmitted together with a proper identifier according to the effective range thereof. That is, the MBMS control information of the CN must be transmitted together with the MBMS identifier used in the CN and the MBMS control information of the UTRAN must be transmitted together with the MBMS identifier used in the UTRAN.

However, according to the conventional mobile communication network, the identifier used in the UTRAN is identical to the identifier used in the cell including the UE. That is, the conventional mobile communication network uses an identifier used in the RNC, so the effective MBMS control information is transmitted from the cell, causing an unnecessary overhead.

For instance, the MBMS service identifier may have a length of about 128 bits if the Internet protocol version 6 is used as a standard. Thus, whenever the control information pertaining to the MBMS is transferred from the RNC to the UE, the MBMS service identifier having the long length must be used to transfer the control information, causing an unnecessary overhead. In addition, it is difficult to effectively use limited radio resources.

3rd Generation Partnership Project: "3GPP TR 23.846 Version 6.1.0: Multimedia Broadcast/Multicast Service (MBMS); Architecture and Functional Description (Release 6)", December 1, 2002, discusses architectural issues and describes functionalities required for the MBMS. The document discusses processes for MBMS Multicast service activation, MBMS broadcast service activation, MBMS RAB setup and service continuity and mobility.

### SUMMARY OF THE INVENTION

It is the object of the present invention to provide improved methods and systems for using an identifier suitable for transmitting the MBMS data or the control information in a mobile communication system providing an MBMS that overcome the problems of the prior art.

This object is solved by the subject matter of the independent claims.

Embodiments are given in the dependent claims.

An advantage of the present invention is to provide a method of allowing a UE to effectively receive the control information pertaining to an MBMS in a mobile communication system providing the MBMS.

Another advantage of the present invention is to provide a method of allowing a cell controller to transmit to a UE the control information regarding an MBMS in a mobile communication system providing the MBMS.

Still another advantage of the present invention is to provide a method of allowing a UE to receive the control information regarding an MBMS in a cell by using a proper identifier in a mobile communication system providing the MBMS.

According to one aspect of the present invention, there is provided a method for transmitting control information to a user equipment to provide a multimedia broadcast/multimedia service (MBMS) in a mobile communication system, the method includes the steps of assigning by means of a radio network controller a cell identifier pertaining to the MBMS and available in a cell that includes the user equipment, the cell identifier being differentiated from an identifier used in an upper layer; and transmitting a control message including the cell identifier to the user equipment for receiving the MBMS.

According to another aspect of the present invention, there is provided a method for transmitting control information to a user equipment by using a cell controller to provide a multimedia broadcast/multimedia service (MBMS) in a mobile communication system, the method including the steps of transmitting a first control message including an MBMS service identifier for identifying a first MBMS from other MBMSs, a Cell_specific_ID identifying a cell that includes the user equipment, and radio bearer information pertaining to a predetermined MBMS to a predetermined user equipment when the predetermined user equipment requests the predetermined MBMS; and transmitting a second control message including the Cell_specific_ID and the control information to the user equipment when the control information pertaining to the MBMS is generated.

According to still another aspect of the present invention, there is provided a method for receiving a multimedia broadcast/multimedia service (MBMS) in a mobile communication system providing the MBMS by using a user equipment, the method including the steps of receiving by means of the user equipment a paging message pertaining the MBMS from a cell controller in such a manner that the user equipment recognizes an existence of control information regarding the MBMS; receiving a control message including a mapping relationship between an identifier used for an upper layer of the MBMS and a cell identifier for identifying the MBMS in a cell that includes the user equipment from the cell controller; and receiving the MBMS by using the cell identifier after the MBMS starts.

According to still another aspect of the present invention, there is provided a method for receiving control information by means of a user equipment in a mobile communication system providing multimedia broadcast/multimedia service (MBMS), the method including the steps of receiving a first control message including an MBMS service identifier for identifying a first MBMS from other MBMSs, a Cell_specific_ID identifying a cell that includes the user equipment from other cells, and radio bearer information pertaining to a predetermined MBMS after joining in the MBMS; and receiving a second control message including the Cell_specific_ID and the control information in order to receive the MBMS while the MBMS is being provided.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a structure of a mobile communication system providing an MBMS;
FIG. 2 is a diagram illustrating a UTRAN used in a mobile communication system providing an MBMS;
FIG. 3 is a diagram illustrating a structure of a UTRAN protocol in a 3GPP mobile communication network;
FIG. 4 is a diagram illustrating a method of using an identifier identifying an MBMS in a cell according to one embodiment of the present invention;
FIG. 5 is a diagram illustrating the MBMS control channels for transmitting an identifier identifying an MBMS in a cell according to one embodiment of the present invention;
FIG. 6 is a flowchart showing an operation of a UTRAN according to one embodiment of the present invention; and
FIG. 7 is a flowchart showing an operation of a UE according to one embodiment of the present invention.

### DETAILED DESCRIPTION OF THE PREFERRED EMBODIMENT

Hereinafter, the preferred embodiments of the present invention will be described with reference to the accompanying drawings. In the following detailed description, representative embodiments of the present invention will be described.

For the purpose of explanation, it is noted that a mobile communication used in the following description is a mobile communication system for the 3^{rd} generation partnership project ("3GPP"), which provides the standards for an asynchronous mobile communication system.

The preferred embodiments of the present invention will be described in detail with reference to accompanying drawings. In the following description of the present invention, a detailed description of known functions and configurations incorporated herein will be omitted when it may obscure the subject matter of the present invention.

The present invention provides a method of effectively using a plurality of identifiers used for identifying the MBMS in a corresponding service node supporting the MBMS in a mobile communication system providing the MBMS.

The present invention provides an MBMS service ID for identifying a predetermined MBMS requested by a UE from other MBMSs, an MBMS CN identifier for identifying the MBMS in a CN, an MBMS UTRAN identifier for identifying the MBMS in the UTRAN to provide the MBMS, and an MBMS cell specific identifier ("MBMS Cell_specific_ID") for identifying the MBMS in the cell that includes the UE. The MBMS Cell_specific_ID identifies a predetermined MBMS in the cell that includes the UE according to the present invention and can be defined as an MBMS radio bearer ("MBMS RB") ID.

Although the MBMS RB ID is represented as an identifier for identifying the MBMS in the cell in the present invention, it is also possible to use other identifiers for identifying the MBMS in the cell without departing from the present invention.

The data pertaining to the MBMS is transmitted to an MBMS RB. The MBMS RB is a connection path for the signals or the data from the UTRAN to the UE. About thirty-two MBMS RBs can be provided for one UE and the MBMS RB has thirty-two values for one cell in the MBMS.

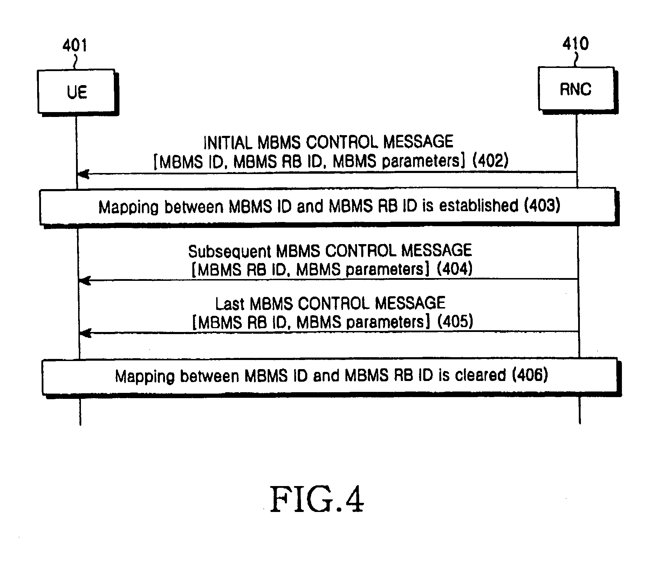

FIG. 4 is a diagram illustrating a method of using the identifier identifying the MBMS in the cell according to one embodiment of the present invention.

An RNC and the UE sequentially perform a service announcement, a subscription, a joining, a notification, and an RB setup processes such that the MBMS can be transmitted to the corresponding UEs. Although the above service announcement, subscription, and the joining processes are omitted in FIG 4, the service announcement, subscription, and the joining processes are carried out prior to the notification process. In addition, after performing the service announcement and the joining processes, the RNC receives a session start message that includes information related to the MBMS service ID and the MBMS QoS parameters from a CN, thereby recognizing that the MBMS may soon start.

Referring to FIG 4, the RNC 410 that receives the session start message from the CN transmits a control message pertaining to the MBMS to the UE 401. The UE 401 receives an initial MBMS control message 402 transmitted from the RNC 410. The initial MBMS control message 402 includes the RB parameters that represent information for determining the radio channels through which the MBMS is to be transmitted, and represent information related to the radio resources in the cell that includes the UE 401, an MBMS ID for discriminating the MBMS requested by the UE 401 in the RNC 410, and an MBMS Cell_specific_ID for discriminating the MBMS in the cell that includes the UE 401 in relation to the MBMS ID.

Herein, the MBMS ID includes the MBMS service ID for identifying the predetermined MBMS requested by the UE 401 from the other MBMSs, the MBMS CN identifier for identifying the MBMS in the CN, and the MBMS UTRAN identifier for identifying the MBMS in the UTRAN (RNC 410) to provide the MBMS. In addition, the initial MBMS control message 402 includes the MBMS Cell_specific_ID for identifying the MBMS in the cell and including the MBMS RB ID

Therefore, the UE that receives the initial MBMS control message 402 may receive corresponding MBMS data by using the MBMS RB information and recognizes the mapping relationship between the MBMS identifiers through the MBMS ID and the MBMS RM ID. When providing the predetermined MBMS, the RNC 410 assigns the MBMS service ID or the Temporary MBMS Group Indicator(TMGI) used in the upper layer including the CN to the MBMS RB ID and transmits the MBMS service ID or the TMGI to the UE 401 through the control message, which is referred to as an "initial MBMS control message".

In step 403 shown in FIG. 4, the UE 401 receives the MBMS control message to check for an MBMS service K in the cell and transmits a response message for the MBMS control message to the RNC 410. That is, in step 402, the UE 401 receiving the MBMS control message recognizes a mapping relationship between the MBMS identifiers through the MBMS ID and the MBMS RB ID. In other words, the UB 401 recognizes the mapping relationship between the MBMS service identifier (TMGI), to which the MBMS is being provided or will be provided, and an identifier for identifying the MBMS service in the cell that includes the UE 401 and transmits the mapping relationship to the RNC 410 through the response message.

At this time, in step 404, if it is required to transmit the control information due to a variation of radio the environment or other causes while providing the MBMS service K, the RNC 410 transmits a control message including the MBMS RB ID and the parameters. For instance, the control message includes a message requesting the change of the information related to the MBMS RB or requesting a measurement of the radio environment.

In step 405, the RNC 410 transmits the control message including the MBMS RB ID and the parameters. The control message includes a message that the MBMS service K has finished or that the session, which is a transmission unit of the MBMS, has finished.

The RNC 410 transmits a relationship between the service identifier for identifying the MBMS in the upper layer and the service identifier for identifying the MBMS in the cell through the initial MBMS control message 402 and transmits the MBMS control message by adding the MBMS RB ID, which is the identifier for identifying the MBMS in the cell, to the MBMS control message. The RNC 410 transmits the control information related to the MBMS service K through the MBMS control message and a last MBMS control message by using only the MBMS RB ID.

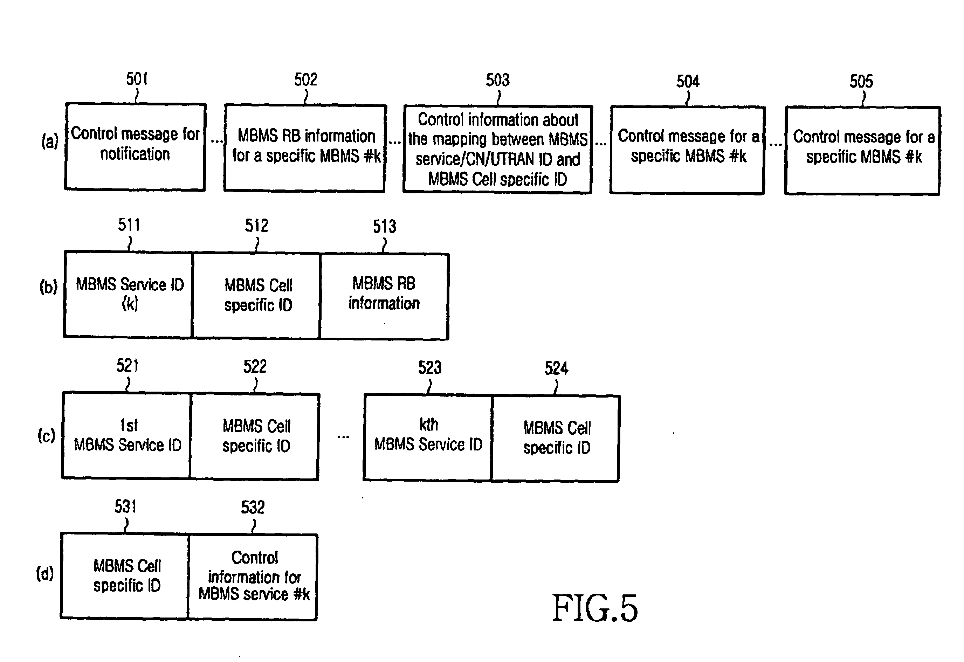

FIG. 5 is a diagram illustrating the MBMS control channels ("MCCH") for transmitting an identifier identifying the MBMS in the cell according to one embodiment of the present invention.

The diagrams (a) through (d) of FIG. 5 show the contents and structures of the control messages to be transmitted as control information regarding the MBMS through the MCCH.

Diagram (a) of FIG. 5 represents a structure of the MCCH for transmitting the control information pertaining to the MBMS service K ("MBMS K") when the MBMS K is provided. Herein, it is assumed that the MCCH is mapped with the FACH included in the transport channels and transmitted through the S-CCPCH.

In diagram (a) of FIG. 5, a control message 501 is a notification message representing that the MBMS K requested by the UE 401 may soon start. Upon receiving the notification message, the UEs provided in a predetermined cell perform a response to the notification. At this time, the RNC 410 of the UTRAN receives the response messages from the UEs and determines a transmission mode for the MBMS K, that is, determines whether to use the PtP service or the PtM service.

The RNC 410 then transmits the RB information related to the MBMS K to the UE 401 through a control message 502 (MCCH) based on the selected transmission mode. The UE 401 that receives the control message 502 may receive the predetermined MBMS K by using the RB information. A structure of the control message 502 is shown in diagram (b) of FIG. 5.

In diagram (b) of FIG. 5, reference numeral 511 represents a service identifier for the MBMS K. The service identifier 511 includes an MBMS CN identifier for identifying the MBMS in the CN related to the MBMS K and an MBMS UTRAN identifier for identifying the MBMS in the UTRAN in order to provide the MBMS. That is, the service identifier 511 is an MBMS service ID for identifying the MBMS K from other MBMSs in the CN or RNC 410. Reference numeral 512 represents an MBMS Cell_specific_ID used for identifying the MBMS K in the cell that includes the UE 401, that is, MBMS RB ID. Reference numeral 513 is MBMS RB information.

A message 503 is a control message for transmitting a mapping relationship between a service identifier for the MBMS K and an identifier for a related to the MBMS K to a UE newly introduced into the cell related to the MBMS K from a predetermined cell or UEs for receiving the MBMS K. That is, the control message 503 transmits the mapping relationship between the service identifier for the MBMS K and the service identifier for the cell to the UE 401 by taking into consideration the mobility of the UEs. A structure of the control message 503 is shown in diagram (c) of FIG. 5.

Referring to diagram (c) of FIG 5, the control message 503 transmits the mapping relationship between the MBMS ID for the MBMS K and the MBMS RB ID to the UE 401. That is, if the UE 401 requests the MBMS K, the CN or the UTRAN may assign the MBMS ID with respect to the MBMS K, which is being provided or to be provided, from the first session to the last session of the MBMS K. At this time, the MBMS RB ID of the cell including the UE 401 is mapped with the MBMS ID and is transmitted to the UE 401.

In FIG 5, reference numeral 521 represents the first MBMS service ID regarding the MBMS K, the MBMS CN identifier for identifying the MBMS service in the CN, or the MBMS UTRAN identifier for identifying the MBMS in the UTRAN. Reference numeral 522 represents the MBMS Cell_specific_ID provided in the cell that is related to the first MBMS service identifier. Reference numeral 523 represents the last MBMS service ID that is related to the MBMS K, the MBMS CN identifier for identifying the last MBMS in the CN, or the MBMS UTRAN identifier for identifying the last MBMS in the UTRAN. Reference numeral 524 represents the MBMS Cell_specific_ID provided in the cell that is related to the last MBMS service ID 523.

If the control information related to the MBMS K is generated some time later, the RNC transmits a message 504 or a message 505 including the MBMS RB ID by adding the control information related the MBMS K to the message 504 or the message 505. That is, if it is necessary to transmit the control information due to a variation of the radio environment in the cell that includes the UE, the RNC may transmit the MBMS control message including the MBMS RB ID having a short length.

At this time, a new UE, is wants to receive the MBMS K, or UEs that have moved into the cell to which the MBMS K is provided may receive the RB information related to the MBMS K, which is periodically transmitted from the RNC to the UEs. In addition, the new UE or the UEs may receive the control information related to the MBMS K by recognizing the mapping relationship between the MBMS ID and the MBMS RB ID of the MBMS K included in the MBMS RB information. The UE may receive the message 504 or the message 505 while recognizing the mapping relationship between the MBMS ID and MBMS RB ID, and then, receive the control information related to the MBMS K.

The structure of the control information 504 and the message 505 regarding the MBMS K are shown in diagram (d) of FIG. 5.

In diagram (d) of FIG. 5, reference numeral 531 represents the MBMS Cell_specific_ID, which is an identifier for identifying the MBMS in the cell, that is, the MBMS RB ID. Reference numeral 522 is the control information related to the MBMS K. The control information may include the RB change information related to the MBMS K or the measurement information related to the MBMS K.

As mentioned above, if the control information related to the MBMS k is generated, the RNC 410 transmits only the MBMS Cell_specific_ID for providing the MBMS K in the cell, that is, the RNC 410 transmits the control information to the UEs provided in the cell by using an identifier having a short length, thereby reducing an overhead caused by the excessive transmission of the identifier and efficiently using radio resources.

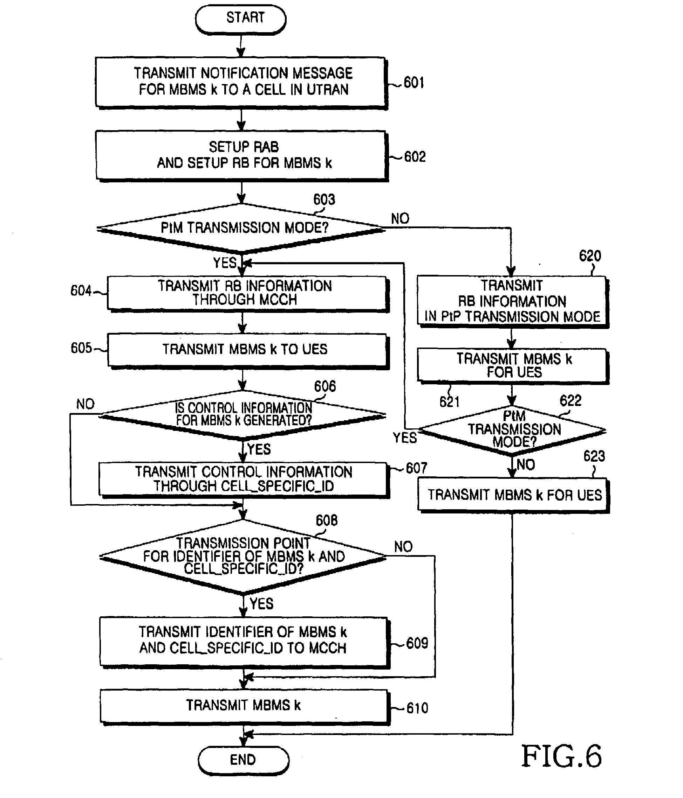

FIG. 6 is a flowchart showing an operation of the UTRAN according to one embodiment of the present invention.

Referring to FIG. 6, the RNC of the UTRAN transmits a notification message related to the MBMS service K to a predetermined cell that includes UEs requesting the MBMS K (step 601). Then, the RNC receives a response message in response to the notification message from the UEs of the cell, performs an RAB setup for the MBMS K based on the response message, and performs an RB setup such that the MBMS data related to the MBMS K are transmitted into the cell (step 602). The RAB setup is a transmission path setup from the CN to the UTRAN for transmitting the MBMS data related to the MBMS K and the RB setup is a transmission path setup from the RNC to the UE for transmitting the MBMS data related to the MBMS K.

Based on the response message transmitted from the UEs, the RNC determines the transmission mode for the MBMS data related to the MBMS K, that is, selects either a PtP transmission mode or a PtM transmission mode. If the number of UEs transmitting the response message in response to the notification message exceeds a predetermined reference number, the PtM transmission mode is selected. In addition, if the number of UEs transmitting the response message in response to the notification message is less than the predetermined reference number, the PtP transmission mode is selected. Accordingly, if the RNC determines that the MBMS data must be transmitted through the PtM transmission mode in step 603, the procedure goes to step 604. If RNC determines that the MBMS data must be transmitted through the PtP transmission mode in step 603, the procedure goes to step 620.

In step 604, the RNC transmits the RB information related to the MBMS K through the MCCH by using the FACH of the S-CCPCH. That is, the RNC transmits the RB information to the UEs, which are provided in the predetermined cell in order to receive the MBMS K. After that, the RNC provides the MBMS K to the UEs of the cell by using the predetermined RB information (step 605).

If the control information related to the MBMS K is generated at a predetermined point as shown in step 606, the RNC transmits the MCCH including the Cell_specific_ID and the RB information related to the MBMS K to the UEs provided in the cell.

If a UE moves into another cell from a predetermined cell, the RNC transmits the CN, the UTRAN MBMS ID, the MBMS Cell_specific_ID or MBMS RB information related to the MBMS K (step 607). This is because the UE cannot recognize the mapping relationship from among the CN, the UTRAN MBMS ID and the MBMS Cell_specific_ID as the UE moves to the other cell. That is, in step 607, the RNC determines a state of the UE and transmits only the MBMS Cell_specific_ID, or transmits the CN, the UTRAN MBMS ID, the MBMS Cell_specific_ID regarding the MBMS K according to the state of the UE.

In addition, the RNC determines whether or not it is necessary to transmit the Cell_specific_ID and the RB information related to the MBMS K (step 608). This is because the RNC periodically transmits RB information related to MBMS K to the UE. If the RNC determines that it is necessary to transmit the Cell_specific_ID and the RB information related to the MBMS K in step 608, the procedure goes to step 609. In step 609, the RNC transmits the Cell_specific_ID and the RB information related to the MBMS K. The RNC may continuously transmit the MBMS K to the UE (step 610).

Meanwhile, if the RNC determines that the MBMS data related to the MBMS K must be transmitted through the PtP transmission mode in step 603, the RNC may transmit the MCCH including the RB information related to the MBMS K by using the DCH of the S-CCPCH (step 620). Accordingly, the RNC assigns the DCH with respect to each UE, which is provided in the predetermined cell to receive the MBMS K, so as to transmit the MCCH including the RB information related to the MBMS K to each UE. After that, the RNC provides the MBMS K to each UE formed in the predetermined cell (step 621).

In addition, the RNC determines whether or not it is necessary to change the transmission mode for the MBMS K being transmitted to each UE through the DCH (step 622). That is, if the number of UEs requesting the MBMS K in the cell to which the MBMS K is provided increases and exceeds the reference number, the RNC changes the transmission mode for the MBMS K from the PtP transmission mode to the PtM transmission mode. In other words, if the RNC determines that the MBMS K must be transmitted through the PtM transmission mode based on the response message transmitted from the UEs in step 622, the procedure goes to step 604. However, if the RNC determines that the MBMS K must be transmitted through the PtP transmission mode, the procedure goes to step 623. In step 623, the RNC transmits the MBMS K through the predetermined DCH.

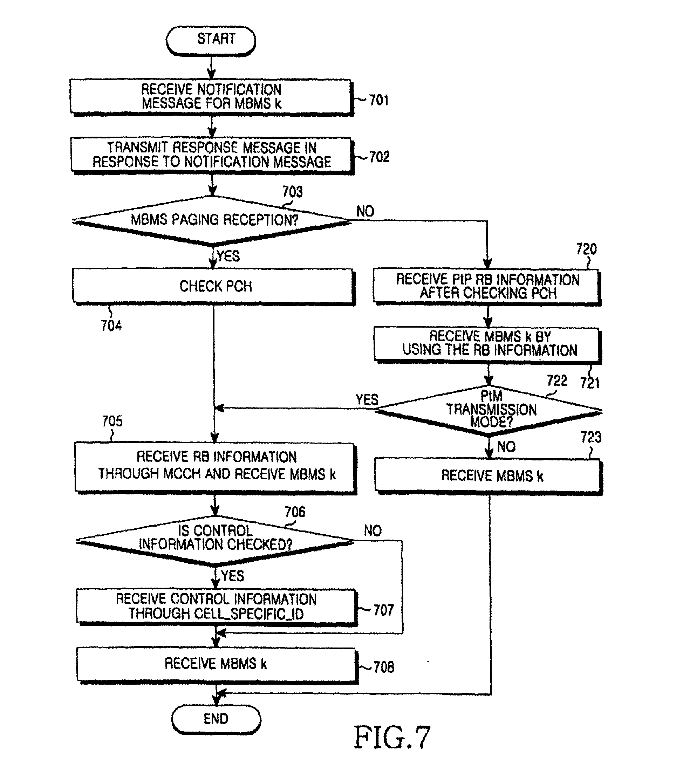

FIG. 7 is a flowchart showing an operation of the UE according to one embodiment of the present invention.

Referring to FIG. 7, the UE receives the notification message related to the MBMS K from the RNC (step 701). In step 702, the UE transmits the response message to the RNC in response to a counting command of the RNC transmitting the notification message. The counting command is a procedure of the RNC for determining the transmission mode in order to allow the UEs provided in the predetermined cell to receive the MBMS K. Then, the UE transmitting the response message waits for a paging message for receiving the RB information related to the MBMS K.

After that, if the UE receives a paging message related to the MBMS K from the RNC in step 703, the procedure goes to step 704. At this time, the UEs requesting the MBMS K may receive the paging message for the MBMS K and check the identifier for the MBMS K in order to determine whether or not there is the control information related to the MBMS K. If the UE recognizes that the control information exists in step 704, the UE determines whether or not the control information related to the MBMS K is suitable for the UE. That is, the UE receives the MBMS service ID of the CN or the UTRAN transmitted to the PCH and determines whether or not the MBMS service ID is suitable for the MBMS K.

If the UE determines that the control information is suitable for the MBMS K in step 704, the UE receives the RB information related to the MBMS K through the MCCH (step 705). After that, the UE receives the MBMS K by using the received RB information.

In addition, the UE that receives the MBMS K determines whether or not the control information related to the MBMS K is transmitted from the RNC (step 706). If there is control information related to the MBMS K, the UE receives the MBMS Cell_specific_ID and the MBMS RB information related to the control information of MBMS K from the RNC (step 707). In addition, the UE continuously receives the MBMS K transmitted from the RNC (step 708).

If the UE does not receive the paging message related to the MBMS K, but receives the paging message for the UE in step 703, the procedure goes to step 720.

In step 720, the UE checks the PCH and receives the PtP RB information through the DCCH. In addition, the UE receives the MBMS K by using the RB information (step 721). If the UE recognizes that MBMS data related to the MBMS K will be transmitted from the RNC through the PtM transmission mode in step 722, the procedure goes to step 705. In step 705, the UE receives the RB information related to the MBMS K through the MCCH. The UEs that receives the MBMS K through the PtP transmission mode by using the RB information of the MBMS K can previously receive the RB information related to the MBMS K through the PtM transmission mode in step 722. In addition, the Ues that receives the MBMS K through the PtP transmission mode may continuously receive the MBMS K in step 723.

As described above, according to the present invention, an identifier is used when transmitting the MBMS data or the MBMS control information, and the identifier is selected by taking into consideration a usable range of the MBMS identifiers, thereby reducing the overhead of the radio resources.

In addition, when providing the MBMS according to the present invention, the identifier is selectively used by taking into consideration an effective range thereof according to a master of the MBMS data or the MBMS control information. Accordingly, it is possible to efficiently use limited radio resources.

While the invention has been shown and described with reference to certain preferred embodiments thereof, it will be understood by those skilled in the art that various changes in form and details may be made therein without departing from the scope of the invention as defined by the appended claims.

## Claims

1. A method for transmitting control information to a user equipment (401) to provide a multimedia broadcast/multicast service, MBMS, in a mobile communication system, **characterized in that** the method comprises the steps of:
i) assigning by a radio network controller (410) a cell specific MBMS identifier related to an MBMS available in a cell that includes the user equipment, the cell specific MBMS identifier being different from a Temporary MBMS service group indicator used in an upper layer; and
ii) transmitting (402) a first control message including a mapping relationship between the Temporary MBMS service group indicator used in the upper layer and the cell specific MBMS identifier.

2. The method as claimed in claim 1, wherein the radio network controller transmits the cell specific MBMS identifier together with radio bearer information related to the MBMS.

3. The method as claimed in claim 2, wherein the radio network controller transmits through an MBMS control channel the cell specific MBMS identifier together with the radio bearer information related to the MBMS.

4. The method as claimed in one of claims 1 to 3, wherein the radio network controller transmits to the user equipment through an MBMS control channel an MBMS service identifier for identifying the MBMS from other MBMSs by adding to the MBMS service identifier a cell specific MBMS identifier of the cell that includes the user equipment and radio bearer information related to the MBMS.

5. The method as claimed in claim 1, further comprising the step of:
iii) transmitting (404, 405) to the user equipment a second control message that includes the cell specific MBMS identifier and a control information when the control information related to the MBMS is generated.

6. The method as claimed in claim 5, wherein the first (402) and second (404, 405) control messages include identifiers related to the MBMS, and the cell specific MBMS identifier of the second control message is shorter than the identifier of the first control message.

7. The method as claimed in claim 6, wherein the radio network controller transmits to the user equipment through an MBMS control channel the cell specific MBMS identifier and the radio bearer information related to the MBMS when control information related to the MBMS is generated.

8. A method for receiving a multimedia broadcast/multicast service, MBMS, in a mobile communication system that provides the MBMS to user equipment (401), **characterized in that** the method comprises the steps of:
i) receiving (402) from a radio network controller a first control message that includes a mapping relationship between a Temporary MBMS service group indicator used for an upper layer of the MBMS and a cell specific MBMS identifier for identifying the MBMS in a cell including the user equipment; and
ii) receiving (404, 405) a second control message that includes the cell specific MBMS identifier and an MBMS control information after the MBMS starts.

9. The method as claimed in claim 8, further comprising the step of:
receiving, by the user equipment (401), a paging message to recognize an existence of control information related to the MBMS before receiving (402) the first control message from the radio network controller (410).

10. The method as claimed in claim 9, wherein the user equipment receives through an MBMS control channel the cell specific MBMS identifier and radio bearer information related to the MBMS.

11. The method as claimed in claim 10, wherein the user equipment determines if a control signal transmitted from the radio network controller is suitable for the MBMS by using the cell specific MBMS identifier transmitted to the user equipment through an MBMS control channel.

12. The method as claimed in claim 11, wherein the user equipment receives the MBMS control information through an MBMS control channel.

13. A radio network controller (410) adapted to transmit control information to a user equipment (401) to provide a multimedia broadcast/multicast service, MBMS, in a mobile communication system and **characterized in that** it comprises means adapted to perform the method as claimed in one of claims 1 to 7.

14. A user equipment (401) adapted to receive multimedia broadcast/multicast service, MBMS, control information in a mobile communication system that provides the MBMS to the user equipment, the user equipment **characterized in that** it comprises means adapted to perform the method as claimed in one of claims 8 to 12.

## Patentansprüche

1. Verfahren zum Senden von Steuerinformationen zu einem Benutzerendgerät (401), um einen MBMS-Dienst (Multimedia Broadcast/Multicast Service) in einem Mobilkommunikationssystem bereitzustellen, **dadurch gekennzeichnet, dass** das Verfahren die folgenden Schritte umfasst:
I) Zuweisen einer zellenspezifischen MBMS-Kennung, die sich auf einen MBMS-Dienst bezieht, der in einer Zelle verfügbar ist, die das Benutzerendgerät einschließt, durch einen Radio Network Controller (410), wobei sich die zellenspezifische MBMS-Kennung von einem temporären MBMS-Dienstgruppen-Indikator (temporary MBMS service group indicator) unterscheidet, der in einer oberen Schicht verwendet wird; und
II) Senden (402) einer ersten Steuernachricht, die eine Zuordnungsbeziehung zwischen dem temporären MBMS-Dienstgruppen-Indikator, der in der oberen Schicht verwendet wird, und der zellenspezifischen MBMS-Kennung enthält.

2. Verfahren nach Anspruch 1, wobei der Radio Network Controller die zellenspezifische MBMS-Kennung zusammen mit Radlo-Bearer-Informationen sendet, die sich auf den MBMS-Dienst beziehen.

3. Verfahren nach Anspruch 2, wobei der Radio Network Controller über einen MBMS-Steuerkanal die zellenspezfische MBMS-Kennung zusammen mit den Radio-Bearer-Informationen sendet, die sich auf den MBMS-Dienst beziehen.

4. Verfahren nach einem der Ansprüche 1 bis 3, wobei der Radio Network Controller eine MBMS-Dienstkennung zum Identifizieren des MBMS-Dienstes gegenüber anderen MBMS-Diensten durch Hinzufügen einer zellenspezifischen MBMS-Kennung der Zelle, die das Benutzerendgerät einschließt, und Radio-Bearer-Informationen, die sich auf den MBMS-Dienst beziehen, zu der MBMS-Dienstkennung über einen MBMS-Steuerkanal zu dem Benutzerendgerät sendet.

5. Verfahren nach Anspruch 1, das des Weiteren den folgenden Schritt umfasst:
III) Senden (404, 405) einer zweiten Steuemachricht, die die zellenspezifische MBMS-Kennung und eine Steuerinformation enthält, zu dem Benutzerendgerät, wenn die Steuerinformationen erzeugt werden, die sich auf den MBMS-Dienst beziehen.

6. Verfahren nach Anspruch 5, wobei die erste (402) und die zweite (404, 405) Steuernachricht Kennungen enthalten, die sich auf den MBMS-Dienst beziehen, und die zellenspezifische MBMS-Kennung der zweiten Steuernachricht kürzer ist als die Kennung der ersten Steuernachricht.

7. Verfahren nach Anspruch 6, wobei der Radio Network Controller die zellenspezifische MBMS-Kennung und die Radio-Bearer-Informationen, die sich auf den MBMS-Dienst beziehen, über einen MBMS-Steuerkanal zu dem Benutzerendgerät sendet, wenn Steuerinformationen erzeugt werden, die sich auf den MBMS-Dienst beziehen.

8. Verfahren zum Empfangen eines MBMS-Dienstes (Multimedia Broadcast/Multicast service) in einem Mobilkommunikationssystem, das den MBMS-Dienst einem Benutzerendgerät (401) bereitstellt, **dadurch gekennzeichnet, dass** das Verfahren die folgenden Schritte umfasst:
I) Empfangen (402) einer ersten Steuernachricht, die eine Zuordnungsbeziehung zwischen einem temporären MBMS-Dienstgruppen-Indikator (temporary MBMS service group indicator), der für eine obere Schicht des MBMS-Dienstes verwendet wird, und einer zellenspezfischen MBMS-Kennung zum Identifizieren des MBMS-Dienstes in einer Zelle, die das Benutzerendgerät einschließt, von einem Radio Network Controller, und
II) Empfangen (404, 405) einer zweiten Steuernachricht, die die zellenspezifische MBMS-Kennung und eine MBMS-Steuerinformation enthält, nach Beginn des MBMS-Dienstes.

9. Verfahren nach Anspruch 8, das des Weiteren den folgenden Schritt umfasst:
Empfangen einer Rufnachricht zum Erkennen einer Existenz von Steuerinformationen, die sich auf den MBMS-Dienst beziehen, vor Empfang (402) der ersten Steuernachricht von dem Radio Network Controller (410) durch das Benutzerendgerät (401).

10. Verfahren nach Anspruch 9, wobei das Benutzerendgerät die zellenspezifische MBMS-Kennung und Radio-Bearer-Informationen, die sich auf den MBMS-Dienst beziehen, über einen MBMS-Steuerkanal empfängt.

11. Verfahren nach Anspruch 10, wobei das Benutzerendgerät unter Verwendung der zellenspezifischen MBMS-Kennung, die über einen MBMS-Steuerkanal zu dem Benutzerendgerät gesendet wird, feststellt, ob ein von dem Radio Network Controller gesendetes Steuersignal für den MBMS-Dienst geeignet ist.

12. Verfahren nach Anspruch 11, wobei das Benutzerendgerät die MBMS-Steuerinformationen über einen MBMS-Steuerkanal empfängt.

13. Radio Network Controller (410), der so eingerichtet ist, dass er Steuerinformationen zu einem Benutzerendgerät (401) sendet, um einen MBMS-Dienst (Multimedia Broadcast/Multicast Service) in einem Mobilkommunikationssystem bereitzustellen, **dadurch gekennzeichnet, dass** er Einrichtungen umfasst, die zum Durchführen des Verfahrens nach einem der Ansprüche 1 bis 7 eingerichtet sind.

14. Benutzerendgerät (401), das zum Empfangen von MBMS-Steuerinformationen (Multimedia Broadcast/Multicast Service Control Information) in einem Mobilkommunikationssystem eingerichtet ist, das dem Benutzerendgerät den MBMS-Dienst bereitstellt, wobei das Benutzerendgerät **dadurch gekennzeichnet ist, dass** es Einrichtungen umfasst, die zum Durchführen des Verfahrens nach einem der Ansprüche 8 bis 12 eingerichtet sind.

## Revendications

1. Procédé pour transmettre des informations de commande à un équipement d'utilisateur (401) pour fournir un service diffusion/multidiffusion multimédia, MBMS (Multimedia Broadcast/Multicast Service), dans un système de communication mobile, **caractérisé en ce que** le procédé comprend les étapes suivantes :
i) affectation par une unité de commande de réseau radio (410) d'un identificateur MBMS spécifique de la cellule et lié à un service MBMS disponible dans une cellule qui contient l'équipement d'utilisateur, l'identificateur MBMS spécifique de la cellule étant différent d'un indicateur de groupe de services MBMS temporaires utilisé dans une couche supérieure ; et
ii) transmission (402) d'un premier message de commande contenant une relation de mise en correspondance entre l'indicateur de groupe de services MBMS temporaires utilisé dans la couche supérieure et l'identificateur MBMS spécifique de la cellule.

2. Procédé selon la revendication 1, dans lequel l'unité de commande de réseau radio transmet l'identificateur MBMS spécifique de la cellule en association avec des informations de support radio liées au service MBMS.

3. Procédé selon la revendication 2, dans lequel l'unité de commande de réseau radio transmet par l'intermédiaire d'un canal de commande MBMS l'identificateur MBMS spécifique de la cellule en association avec les informations de support radio liées au service MBMS.

4. Procédé selon l'une des revendications 1 à 3, dans lequel l'unité de commande de réseau radio transmet à l'équipement d'utilisateur par l'intermédiaire d'un canal de commande MBMS un identificateur de service MBMS permettant d'identifier le service MBMS parmi d'autres services MBMS en ajoutant à l'identificateur de service MBMS un identificateur MBMS spécifique de la cellule qui contient l'équipement d'utilisateur et des informations de support radio liées au service MBMS.

5. Procédé selon la revendication 1, comprenant en outre l'étape suivante :
iii) transmission (404, 405) à l'équipement d'utilisateur d'un deuxième message de commande qui contient l'identificateur MBMS spécifique de la cellule et des informations de commande lorsque les informations de commande liées au service MBMS sont générées.

6. Procédé selon la revendication 5, dans lequel les premier (402) et deuxième (404, 405) messages de commande contiennent des identificateurs liés au service MBMS et l'identificateur MBMS spécifique de la cellule du deuxième message de commande est plus court que l'identificateur du premier message de commande.

7. Procédé selon la revendication 6, dans lequel l'unité de commande de réseau radio transmet à l'équipement d'utilisateur par l'intermédiaire du canal de commande MBMS l'identificateur MBMS spécifique de la cellule et les informations de support radio liées aux services MBMS lorsque les informations de commande liées au service MBMS sont générées.

8. Procédé pour recevoir un service de diffusion/multidiffusion multimédia, MBMS, dans un système de communication mobile qui fournit le service MBMS à un équipement d'utilisateur (401), **caractérisé en ce que** le procédé comprend les étapes suivantes :
i) réception (402) en provenance d'une unité de commande de réseau radio d'un premier message de commande qui contient une relation de mise en correspondance entre un indicateur de groupe de services MBMS temporaires utilisé pour une couche supérieure du service MBMS et un identificateur MBMS spécifique de la cellule permettant d'identifier le service MBMS dans une cellule contenant l'équipement d'utilisateur ; et
ii) réception (404, 405) d'un deuxième message de commande qui contient l'identificateur MBMS spécifique de la cellule et des informations de commande MBMS après que le service MBMS a commencé.

9. Procédé selon la revendication 8, comprenant en outre l'étape suivante :
réception par l'équipement d'utilisateur (401) d'un message de recherche destiné à reconnaître l'existence d'informations de commande liées au service MBMS avant de recevoir (402) le premier message de commande en provenance de l'unité de commande de réseau radio (410).

10. Procédé selon la revendication 9, dans lequel l'équipement d'utilisateur reçoit par l'intermédiaire d'un canal de commande MBMS l'identificateur MBMS spécifique de la cellule et des informations de support radio liées au service MBMS.

11. Procédé selon la revendication 10, dans lequel l'équipement d'utilisateur détermine si un signal de commande transmis par l'unité de commande de réseau radio est approprié pour le service MBMS en utilisant l'identificateur MBMS spécifique de la cellule transmis à l'équipement d'utilisateur par l'intermédiaire d'un canal de commande MBMS.

12. Procédé selon la revendication 11, dans lequel l'équipement d'utilisateur reçoit les informations de commande MBMS par l'intermédiaire d'un canal de commande MBMS.

13. Unité de commande de réseau radio (410) conçue pour transmettre des informations de commande à un équipement d'utilisateur (401) pour fournir un service de diffusion/multidiffusion multimédia, MBMS, dans un système de communication mobile et **caractérisé en ce qu'**il comprend un moyen conçu pour mettre en oeuvre le procédé selon l'une des revendications 1 à 7.

14. Equipement d'utilisateur (401) conçu pour recevoir des informations de commande de service de diffusion/multidiffusion multimédia, MBMS, dans un système de communication mobile qui fournit le service MBMS à l'équipement d'utilisateur, l'équipement d'utilisateur étant **caractérisé en ce qu'**il comprend un moyen conçu pour mettre en oeuvre le procédé selon l'une des revendications 8 à 12.
